# EUROPEAN PATENT APPLICATION

(11) **EP 3 251 815 A1**
(43) Date of publication of application: **06.12.2017**
(21) Application number: 15879869.4
(22) Date of filing: 26.01.2015
(51) Int. Cl.: B29C 45/77, B65D 63/10

(54) **INJECTION MOLDING METHOD USING PEEK MATERIAL AND MOLDED ITEMS**

(71) Applicant: Toskabano'k Co., Ltd., Tokyo 112-0014 (JP)
(72) Inventor: HIRAI,Tomoyuki, Chibashi Chiba 267-0055 (JP)
(74) Representative: Lambacher, Michael
(86) International application number: PCT/JP2015/052031
(87) International publication number: WO 2016/120972

(57) **Abstract**

Injection molding of a molded item using a PEEK material involves a filling peak pressure of 40 to 150 MPa. In addition, the injection molding may include a stretching treatment, such as in-mold stretching processing, where necessary, via multipoint gates. The molded item thus obtained has much higher flexibility, elasticity, or viscosity while maintaining toughness and rigidity peculiar to PEEK compared with conventional molded items made of PEEK material, and various molded items, such as fitting-type locking mechanisms, hinges, and the like, requiring such properties can be obtained.

## Description

### Technical Field

The present invention relates to an injection molding method using a polyether ether ketone (referred to below as PEEK) material and a molded item obtained by the injection molding method.

### Background Art

Originally, PEEK does not rupture because of its large toughness, corresponds to wide molding conditions depending on the weight-average molecular weight, and has excellent heat resistance against low and high temperature. Conventionally, when a molded item is manufactured by injection molding, PEEK is used at a high pressure of 180 MPa to 280 MPa to make full use of its tough physical properties.

However, when PEEK is used in this injection molding, the toughness and rigidity become too high and the flexibility and viscosity are insufficient. Accordingly, when a molded item is manufactured, fracture or breakage is caused by an impact, thereby limiting the shape and effect of the molded item to be obtained.

### Citation List

### Patent Literature

PTL 1: JP-A-6-170983

### Summary of Invention

### Technical Problem

Problems to be solved by the invention are that a molded item having flexibility and viscosity could not be manufactured conventionally by using a PEEK material and that there was no molded item of a PEEK material that has flexibility, viscosity, and elasticity.

### Solution to Problem

To address the above problems, in an injection molding method using a polyether ether ketone (PEEK) material according to the invention, a filling peak pressure is 40 MPa to 150 MPa when injection-molding a molded item by a PEEK material.

In addition, in the injection molding method using a PEEK material according to the invention, the PEEK material is injected to form the molded item from a runner member through a multipoint gate, the PEEK material is injected to form the molded item from the runner member through the multipoint gate and then a subrunner, and the runner member and the subrunner are connected to each other by a film gate.

In addition, in the injection molding method using a PEEK material according to the invention, stretching processing is applied after the PEEK material is injected to increase a length 1.2 to 5 fold and increase a diameter to 0.2 mm to 1.0 mm and the stretching processing uses an in-mold stretching method.

In addition, a molded item molded by the injection molding method using a PEEK material according to the invention described in any one of claims 1 to 4 is a locking pin member provided integrally with retaining parts at both ends thereof, in which one of the retaining parts is formed in a paddle.

In addition, a molded item molded by the injection molding method using a PEEK material according to the invention described in claim 5 or 6 is a fastener locking member provided with an insertion part integrally having an engagement part at one end and provided with a locking part that receives the insertion part, engages with the engagement part, and locks a loop state at the other end.

In addition, a molded item molded by the injection molding method using a PEEK material according to the invention described in claim 1 is a tie band provided with an insertion hole having an engagement pawl at one end and provided with continuous ratchet pawls arranged at a constant pitch on one surface in contact with the engagement pawl.

In addition, a molded item molded by the injection molding method using a PEEK material according to the invention described in claim 1 is a bag mouth clip that has a pair of clamping pieces integrally coupled via a hinge, in which one of the clamping pieces is provided with an engagement pawl and the other of the clamping pieces is provided with a reception pawl for receiving and fixing the engagement pawl.

In addition, a molded item molded by the injection molding method using a PEEK material according to the invention described in claim 1 is a fastener locking member having, as molded items, an insertion part provided with an engagement part and a reception part provided with a locking part into which the insertion part is inserted and with which the engagement part engages, in which the insertion part and the reception part are fixed to ends of a loop mold member.

In addition, a molded item molded by the injection molding method using a PEEK material according to the invention described in claim 1 or 2 is a chain fastener locking member having a chain-like loop mold body in which ring bodies are connected continuously, in which one end of the loop mold body has an insertion part provided with an engagement part and the other end of the loop mold body has a locking part into which the insertion part is inserted and with which the engagement part engages.

In addition, a molded item molded by the injection molding method using a PEEK material according to the invention described in claim 1 or 2 is a coil spring.

### Advantageous Effects of Invention

According to the aspect described in claim 1, the molded item injection-molded using the PEEK material can have flexibility, viscosity, and elasticity. According to the aspects described in claims 2 to 4, the filling pressure in the mold of the PEEK material can be prevented from reducing. According to the aspects described in claims 5 and 6, stretching processing can be performed by the in-mold stretching method, so a stretch is enabled while the temperature of the PEEK material is high and the stretching processing improves the strength of the molded item.

According to the aspects described in claims 7 and 8, the pin part is stretched and strengthened, so the flexibility and elasticity required when retaining parts are restored after passing through the hollow needle for forming an attachment equipment slit can be obtained.

According to the aspect described in claim 9, the flexibility and elasticity of the engagement part of the insertion part and the locking part of the reception part can be obtained and the loop mold part is strengthened by stretching processing.

According to the aspect described in claim 10, the flexibility of the band part during tying can be obtained and the flexibility and elasticity of the engagement pawl and the ratchet pawls can be obtained.

According to the aspect described in claim 11, the flexibility and elasticity of the hinge part for coupling the pair of clamping pieces can be obtained and the flexibility and elasticity of the engagement pawl and the reception pawl can be obtained.

According to the aspect described in claim 12, the flexibility and elasticity of the engagement part of the insertion part and the locking part of the reception part can be obtained.

According to the aspect described in claim 13, the flexibility and elasticity of the engagement part of the insertion part and the locking part thereof can be obtained, so it is possible to obtain a product in which the diameter of the ring bodies forming the chain can be reduced by stretching processing.

According to the aspect described in claim 14, it is possible to make full use of the function of the coil spring by effectively using flexibility and elasticity.

### Brief Description of Drawings

[Fig. 1] Fig. 1 is a front view illustrating a locking pin member molded as an assembly.
[Fig. 2] Fig. 2 is a side view.
[Fig. 3] Fig. 3 is a front view illustrating the assembly of the locking pin member in which one end of retaining parts is formed in a paddle.
[Fig. 4] Fig. 4 is a side view.
[Fig. 5] Fig. 5 is a front view illustrating a fastener locking member.
[Fig. 6] Fig. 6 is a cross sectional view illustrating a reception part.
[Fig. 7] Fig. 7 is a structural diagram illustrating the configuration of an in-mold stretching method.
[Fig. 8] Fig. 8 is a cross sectional view taken along line A-A during injection of a PEEK material.
[Fig. 9] Fig. 9 is a cross sectional view taken along line A-A during a stretch.
[Fig. 10] Fig. 10 is a front view illustrating a tie band.
[Fig. 11] Fig. 11 is a side view.
[Fig. 12] Fig. 12 is an enlarged plan view illustrating an insertion hole.
[Fig. 13] Fig. 13 is a cross sectional view.
[Fig. 14] Fig. 14 is an enlarged side view illustrating the main part of the band.
[Fig. 15] Fig. 15 is a front view illustrating a bag mouth clip.
[Fig. 16] Fig. 16 is a rear view.
[Fig. 17] Fig. 17 is a plan view.
[Fig. 18] Fig. 18 is a side view.
[Fig. 19] Fig. 19 illustrates a use state.
[Fig. 20] Fig. 20 is a front view illustrating the fastener locking member in which a thread is used as a loop mold member.
[Fig. 21] Fig. 21 is a front view illustrating a lock state.
[Fig. 22] Fig. 22 is a side view illustrating the reception part.
[Fig. 23] Fig. 23 illustrates a chain lock member.
[Fig. 24] Fig. 24 is a front view illustrating the mold assembly state of a coil spring.
[Fig. 25] Fig. 25 is a plan view.

### Description of Embodiments

The invention is achieved by performing configuration as illustrated in the drawings and as described in the embodiment.

### Embodiment 1

Next, a preferable embodiment of the invention will be described with reference to the drawings. The invention is based on the condition described in claim 1 and a molded item is obtained based on the injection molding method described in claim 1. That is, when a molded item is injection-molded using a PEEK material in the invention, the filling peak pressure of the mold is 40 MPa to 150 MPa, which is much lower than the pressure (180 MPa to 280 MPa) used conventionally. Molding under such a low pressure provides the molded item with characteristics such as flexibility, viscosity, and elasticity.

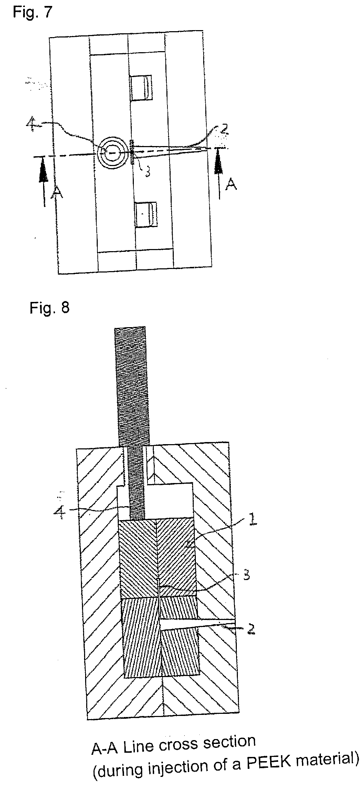

Of stretching treatments performed as necessary, the in-mold stretching method is performed based on the principle illustrated in Figs. 7 to 9. In Figs. 7 to 9, reference numeral 1 represent mold product inserts and the mold product inserts 1 are attached to a mount plate. The mold product inserts 1 are provided with a sprue 2 for PEEK, which is a raw material, and the sprue 2 penetrates through the mount plate. The sprue 2 communicates with a molding part 3, which is a filament, in the mold product inserts 1. The molding part 3 is filled with PEEK at the filling peak pressure of 40 MPa to 150 MPa of the molding machine, one of the mold product inserts 1 is slid by operating a piston member 4, the filament molded in the molding part 3 is stretched 1.2 to 5 fold from the original length of the mold, and the diameter of the filament is increased to 0.2 mm to 1.0 mm. Since this in-mold stretching method can perform treatment while the temperature of the injected PEEK is high, the efficiency is high and the stretched filament is strengthened, thereby preventing fracture or breakage.

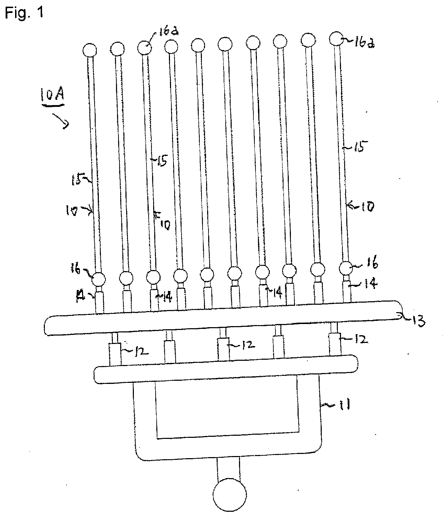

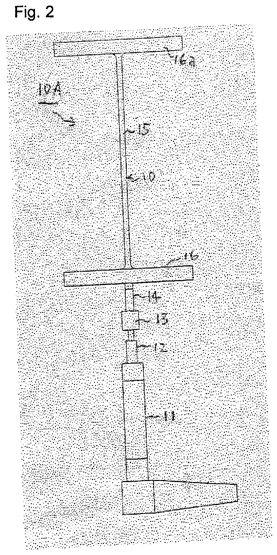

In addition, Figs. 1 and 2 illustrate an assembly 10A, which represents molded items of locking pin members 10 used for, for example, hanging tags or bonding heat insulating materials having wrapped a target. The assembly 10A of locking pin members 10 can be obtained by practicing claim 1, claim 2, and particularly claim 3. This assembly 10A has a runner 11 and the runner 11 is coupled to a subrunner 13 through multipoint gates 12, ..., 12.

The subrunner 13 is coupled to the discrete locking pin members 10, ..., 10 via gates (coupling parts) 14,..., 14. The gates 14, ..., 14 are cut by a cutting tool provided for known attachment equipment of the locking pin members 10, ..., 10, so that the locking pin members 10 can be used as discrete components. In each of the locking pin members 10, both ends of a stretched filament 15 are provided integrally with horizontal bars 16 and 16a for retaining. The horizontal bar 16 of these horizontal bars 16 and 16a is inserted into a hollow needle for forming an attachment equipment slit along the filament 15 by a piston after the gate 14 is cut, and the horizontal bar 16 is restored for retaining after the hollow needle passes through the target.

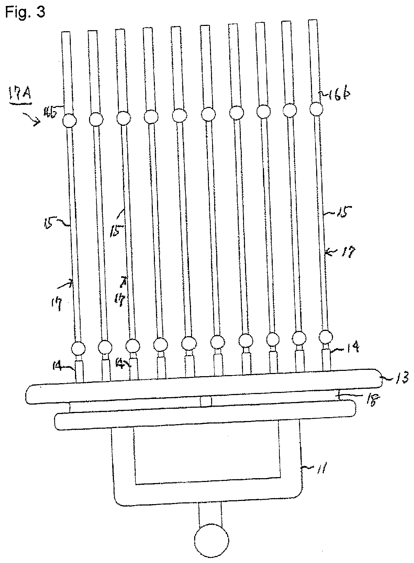

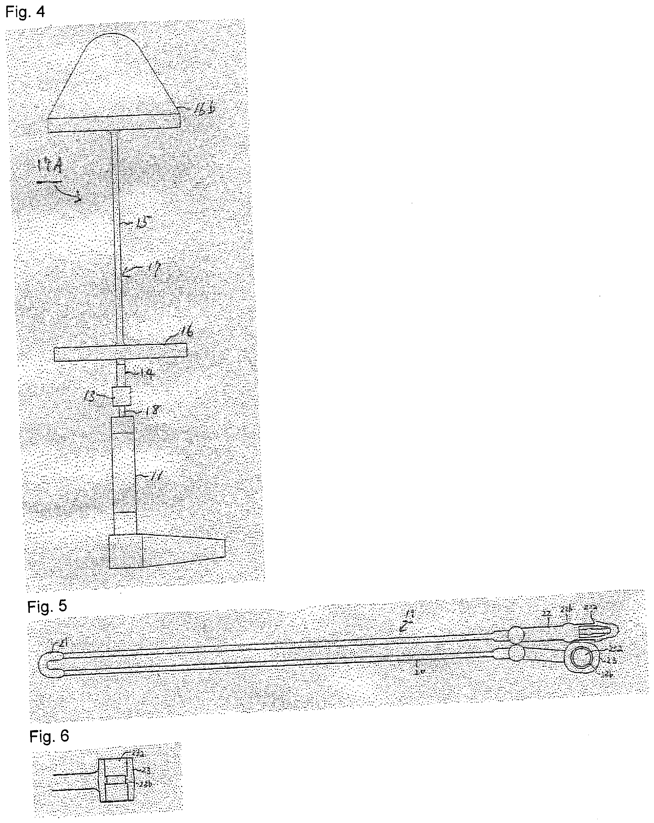

Although locking pin members 17, ..., 17 illustrated in Figs. 3 and 4 have the same uses as the locking pin members 10, an assembly 17A is molded by the injection molding method described particularly in claim 4. In addition, in the case of the assembly 17A, a film gate 18 is present between the runner 11 and the subrunner 13. In addition, a retaining part 16b is not a simple horizontal bar, but formed in a paddle and any indication is enabled. The effect of the horizontal bar 16 is the same as above.

Figs. 5 and 6 illustrate a fastener locking member 19 molded by practicing particularly claim 5. This fastener locking member 19 has a stretched filament 20 and the filament 20 may be one piece bent in the middle or two pieces connected at the ends by a U-shaped coupling support member (cover) 21. Alternatively, the bent part of one piece may be reinforced by the coupling support member 21. One end of the filament 20 is provided integrally with an insertion part 22 having an engagement part 22a. Reference numeral 22b represents the stopper of the insertion part 22.

The other end of the filament 20 is provided integrally with a reception part 23 having a through hole 23a into which the insertion part 22 is inserted. In addition, on the inner peripheral surface of the through hole 23a, a locking part 23b that engages with and locks the engagement part 22a of the insertion part 22 is integrally formed in an annular form.

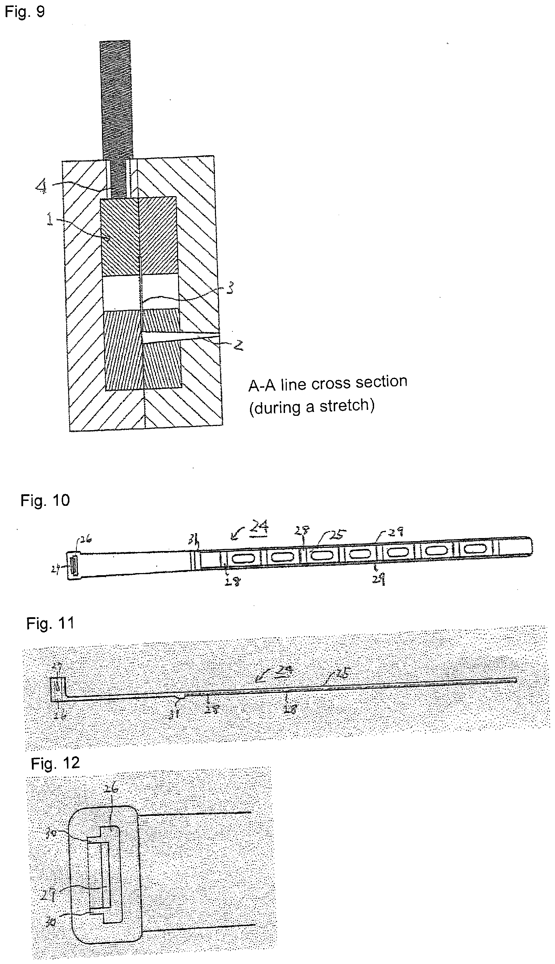

A tie band 24 illustrated in Figs. 10 to 14 is molded by practicing the aspect described in claim 1. In this tie band 24, one end of a band part 25 having a predetermined width is provided with an insertion hole 26 through which the other end passes and the insertion hole 26 is provided with an engagement pawl 27. In addition, on one surface (that is, the surface in contact with the engagement pawl 27) of the band part 25, ratchet pawls 28, ..., 28 are formed at a predetermined pitch. In addition, guide rails 29 and 29 are formed at the side edge of the surface on which the ratchet pawls 28, ..., 28 are formed and, on both sides of the engagement pawl 27, slits 30 and 30 through which the guide rails 29 and 29 pass are formed. It should be noted that reference numeral 31 represents a stopper functioning as the limit of tying of the band 25. When the tie band 24 is configured as described above, the flexibility and elasticity of the engagement pawl 27 and the ratchet pawl 28 can be obtained and the flexibility of the band part 25 during tying can be obtained.

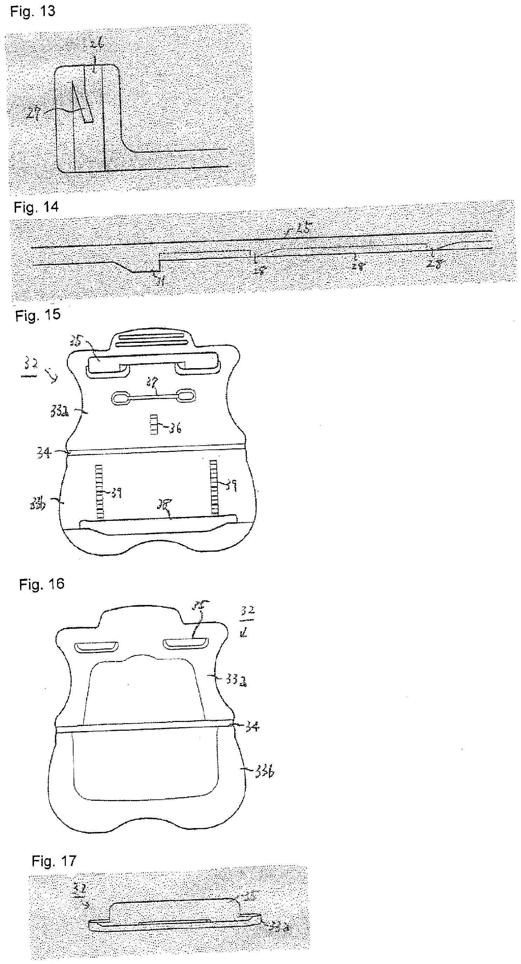

In addition, a bag mouth clip 32 illustrated in Figs. 15 to 19 is molded by practicing the aspect described in claim 1. The bag mouth clip 32 has a pair of clamping pieces 33a and 33b via a hinge 34. An engagement pawl 35, a biting part 36 that bites into the bag mouth, and a support bar 37 are formed on the inner surface of the clamping piece 33a. On the other hand, a reception pawl 38 that receives and locks the engagement pawl 35 and biting parts 39 and 39 that bite into the bag mouth are formed on the clamping piece 33b. Although the bag mouth clip 32 clamps and locks the open bag mouth, a PEEK material can also be used to particularly obtain the flexibility of the hinge 34 and obtain the elasticity of the engagement pawl 35 and the reception pawl 38.

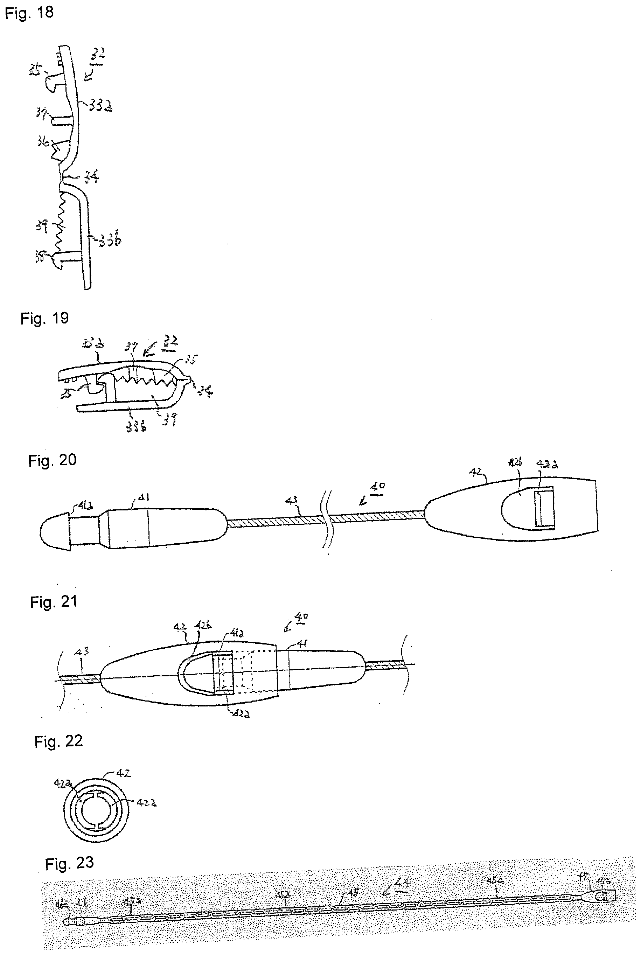

A fastener locking member 40 illustrated in Figs. 20 to 22 is molded as an insertion part 41 and a reception part 42 for the insertion part 41 by practicing the aspect described in claim 1, these components are fixed to the end parts of a loop mold member 43, and a thread is used as the loop mold member 43 in the embodiment. Of course, this thread may be replaced with a plastic fiber. A stepped part is formed as an engagement part 41a at an end of the insertion part 41 and the end thereof is spherical to facilitate insertion into the reception part 42.

The end surface of the reception part 42 has an opening into which the insertion part 41 can be inserted. Inside this opening, a pair of pawls is formed as locking parts 42a with which the engagement part 41a is engaged. It should be noted that reference numeral 42b represents a window hole formed in the reception part 42 through which the lock state can be seen and the pawls can be easily widened. In such a structure, the flexibility and elasticity of particularly the locking parts 42a can be obtained.

In addition, a chain fastener locking member 44 illustrated in Fig. 23 is molded by practicing the aspect described in claims 1 and 2 or the aspect described in claims 5 and 6. The chain fastener locking member 44 has a chain-like loop mold body 45 in which many ring bodies 45a, ..., 45a obtained by forming stretched fibers in rings are connected continuously. One end of the loop mold body 45 is provided integrally with an insertion part 46 having an engagement part 46a and the other end is provided integrally with a reception part 47 having a locking part 47a that engages with and locks the engagement part 46a. In such a structure, the diameter of the ring bodies 45a, ..., 45a can be reduced and the bendability of the loop mold body 45 can be improved. In addition, the flexibility and elasticity of the locking part 47a can be obtained.

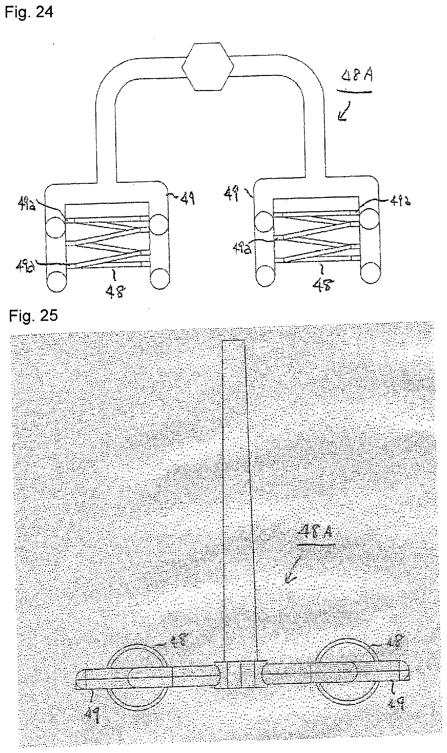

An assembly 48A of coil springs 48 and 48 illustrated in Figs. 24 and 25 is molded by practicing the aspect described in claim 1 or 2. In the assembly 48A, the coil springs 48 are injection-molded by injecting a PEEK material from runners 49 and 49 through multipoint gates 49a, ... , 49a. The molded coil springs 48 are used as discrete components by separating the multipoint gates 49a, ..., 49a from the runner 49 using a cutting tool or tearing the multipoint gates 49a, ..., 49a. The coil spring 48 can obtain sufficient flexibility and elasticity by using the injection molding method according to the invention.

### Industrial Applicability

The injection molding method using a PEEK material according to the embodiment and the molded item using this method are configured as described above. By practicing the injection molding methods described in claims 1 to 6, products that need flexibility, elasticity, or viscosity can be obtained using a PEEK material in addition to the molded items specifically illustrated in the embodiment.

### Reference Signs List

1: product insert
2: sprue
3: molding part
4: piston member
10, 17: locking pin member
10A, 17A, 48A: assembly
11, 49: runner
12, 14, 49a: gate
13: subrunner
15, 20: filament
16, 16a, 16b: horizontal bar
18: film gate
19, 40: fastener locking member
21: coupling support member (cover)
22, 41, 46: insertion part
22a, 41a, 46a: engagement part
22b, 31: stopper
23, 42, 47: reception part
23a: through hole
23b, 42a, 47a: locking part
24: tie band
25: band part
26: insertion hole
27, 35: engagement pawl
28: ratchet pawl
29: guide rail
30: slit
32: bag mouth clip
33a, 33b: clamping piece
34: hinge
36, 39: biting part
37: support bar
38: reception pawl
42b: window hole
44: chain fastener locking member
45: loop mold body
45a: ring body
48: coil spring

## Claims

1. An injection molding method for a molded item using a polyether ether ketone (PEEK) material,
wherein a filling peak pressure is 40 MPa to 150 MPa.

2. The injection molding method using a PEEK material according to claim 1,
wherein the PEEK material is injected to form the molded item from a runner member through a multipoint gate.

3. The injection molding method using a PEEK material according to claim 1 or 2,
wherein the PEEK material is injected to form the molded item from the runner member through the multipoint gate and then a subrunner.

4. The injection molding method using a PEEK material according to claim 3,
wherein the runner member and the subrunner are connected to each other by a film gate.

5. The injection molding method using a PEEK material according to claim 1,
wherein, stretching processing is applied after the PEEK material is injected to increase a length 1.2 to 5 fold and increase a diameter from 0.2 mm to 1.0 mm.

6. The injection molding method using a PEEK material according to claim 5,
wherein the stretching processing uses an in-mold stretching method.

7. A molded item molded by the injection molding method according to any one of claims 1 to 4,
wherein the molded item is a locking pin member provided integrally with retaining parts at both ends thereof.

8. The locking pin member according to claim 7,
wherein one of the retaining parts is formed in a paddle.

9. A molded item molded by the injection molding method according to any one of claims 5 to 6,
wherein the molded item is a fastener locking member provided with an insertion part integrally having an engagement part at one end and provided with a locking part that receives the insertion part, engages with the engagement part, and locks a loop state at the other end.

10. The molded item molded by the injection molding method according to claim 1,
wherein the molded item is a tie band provided with an insertion hole having an engagement pawl at one end and provided with continuous ratchet pawls arranged at a constant pitch on one surface in contact with the engagement pawl.

11. The molded item molded by the injection molding method according to claim 1,
wherein the molded item is a bag mouth clip that has a pair of clamping pieces integrally coupled via a hinge, one of the clamping pieces is provided with an engagement pawl, and the other of the clamping pieces is provided with a reception pawl for receiving and fixing the engagement pawl.

12. The molded item molded by the injection molding method according to claim 1,
wherein the molded item is a fastener locking member having, as molded items, an insertion part provided with an engagement part and a reception part provided with a locking part into which the insertion part is inserted and with which the engagement part engages and
wherein the insertion part and the reception part are fixed to ends of a loop mold member.

13. The molded item molded by the injection molding method according to claim 1 or 2,
wherein the molded item is a chain fastener locking member having a chain-like loop mold body in which ring bodies are connected continuously, one end of the loop mold body has an insertion part provided with an engagement part, and the other end of the loop mold body has a locking part into which the insertion part is inserted and with which the engagement part engages.

14. The molded item molded by the injection molding method according to claim 1 or 2,
wherein the molded item is a coil spring.
